# EUROPEAN PATENT SPECIFICATION

(11) **EP 1 612 706 B1**
(45) Date of publication and mention of the grant of the patent: **15.10.2008**
(21) Application number: 05253894.9
(22) Date of filing: 23.06.2005
(51) Int. Cl.: G06F 17/30

(54) **Content storage device**
Inhaltsspeichereinrichtung
Dispositif de stockage de contenu

(30) Priority: 30.06.2004 JP 2004193888
(43) Date of publication of application: 04.01.2006
(73) Proprietor: Sony Corporation, Tokyo 141-0001 (JP)
(72) Inventor: Miyazawa, Masaaki c/o Sony Corporation,, Tokyo (JP); Yamauchi,Yasuharu c/o Sony Corporation,, Tokyo (JP)
(74) Representative: Smith, Samuel Leonard

(56) References cited:
- EP-A- 1 220 116
- WO-A-02/01548
- US-A1- 2002 060 955
- US-A1- 2002 147 728
- US-A1- 2003 100 967
- US-B1- 6 232 539

## Description

The present invention contains subject matter related to Japanese Patent Application JP2004-093888 filed in the Japanese Patent Office on June 30, 2005.

The present invention relates to a content storage device, suitably applied to portable playback devices which stores music data transferred from, for instance, a personal computer onto an internal hard disk, and plays music data from the hard disk in response to user operation.

In recent years, due to the provision of small size high-capacity internal hard disks, portable playback devices have become capable of storing large quantities of music data transferred from personal computers in their hard disks.

Portable playback devices categorize music names of an abundance of music data (i.e. music names of music based on music data) stored in their internal hard disks according to genres that the music belongs to, or artists performing the music, and display them on a display section. The portable playback devices then play music data corresponding to the music name etc. selected by user operation from the abundance of music names etc. displayed on the display section. (For instance, refer to United States Patent Application Publication No. 2004/0055446A1).

US-B1-6,232,539 discloses a music organizer and entertainment center having a microprocessor, sound card functions and high-volume data storage and retrieval units for playing back music according to a variety of pre-determined categories. The songs are typically loaded using a custom CD-ROM provided from the service provider.

Incidentally, thus configured portable playback devices build in their internal hard disks music search databases for registering music search information which categorize and indicate music names etc. according to artists or genres to be used for searching music data. Meanwhile, personal computers generate, whenever transferring music data to portable playback devices, music search information based on music attribute information such as the music name, artist name or genre name attached to the music data. Personal computers then transfer music search information together with music data to the portable playback device to be registered in the music search database. Thus, in response to user operation during playing of music data, portable playback devices read music search information from the music search database in the hard disk, and categorize music names etc. according to genre or artist based on the read music search information and display it on the display section, thereby enabling the user to search the desired music.

Personal computers generate music search information according to a music search information generating program. When music data is transferable to multiple portable playback devices, and the configurations of music search information to be transferred to each portable playback device differ, personal computers may require a plurality of types of music search information generating programs corresponding to the various music search information. Therefore, in a music transfer/storage system including a personal computer and a portable playback device, when the personal computer is capable of transferring differently configured music search information to multiple portable playback devices, the burden of developing music search information generating programs will increase.

Thus, in such music transfer/storage systems, it is conceivable that each portable playback device generates music search information. However, since portable playback devices are capable of storing large quantities of music data in their hard disks, the increase in the number of music data to be stored will lead to an increase in the number of music attribute information used to generate music search information, thereby increasing processing load for generating music search information.

The present invention has been made in light of the above problems, and intends to propose a content storage device which is capable of generating content search information while minimizing processing load.

To solve the above-described problems, the present invention provides, in a content storage device, content acquisition section which externally acquires content data, storage section which stores content data acquired by the content acquisition section, information acquisition section which externally acquires attribute-based content information which categorizes and indicates the content data according to the attributes of the content data stored in the storage unit, and search information generating section which generates, using attribute-based content information acquired by the information acquisition section, content search information to be used in searching content data stored in the storage unit.

Therefore, by generating content search information using externally generated attribute-based content information, the content storage device enables significant reduction of processing when generating the content search information, in comparison to generating content search information from scratch based on content attribute information of content data.

According to the present invention there is provided a content storage device comprising:
data acquisition means for externally acquiring content data and attribute-based content information which categorizes and indicates the content data according to each attribute of the content data, wherein the data acquisition means is constructed and arranged to acquire the attribute-based content information separately to the content data, and said attribute-based content information comprises attribute-based content information for at least first and second attributes;
storage means for storing said content data acquired by said data acquisition means; and
search information generating means for generating, with said attribute-based content information acquired by said information acquisition means, content search information to be used for searching said content data stored in said storage means,
wherein the search information generating means is constructed and arranged to generate the content search information by generating a conversion table from attribute-based content information for said first attribute and then using the conversion table to create the content search information from attribute-based content information for said second attribute.

According to this invention the processing which may be required for generating content search information can be significantly reduced, thereby making it possible to generate content search information while minimizing processing load.

The nature, principle and utility of the invention will become more apparent from the following detailed description when read in conjunction with the accompanying drawings in which like pares are designate by like reference numerals or characters.

The invention will now be described by way of nonlimiting example with reference to the figures, in which:
FIG. 1 is a schematic view of a music transfer/storage system according to the present invention;
FIG. 2 is a block diagram showing a circuitry of a personal computer;
FIG. 3 is a schematic view of music management information;
FIG. 4 is a schematic view of genre-based music information;
FIG. 5 is a schematic view of artist-based music information;
FIG. 6 is a schematic view of album-based music information;
FIG. 7 is a block diagram showing a circuitry of a portable playback device;
FIG. 8 is a schematic view to be used in explaining the generation of a conversion table;
FIG. 9 is a schematic view to be used in explaining the generation of music search information;
FIG. 10 is a schematic view to be used in explaining a hierarchical structure of a group in music search information;
FIG. 11 is a schematic view showing a form of registration of music search information;
FIG. 12 is a sequence showing a music transfer/storage procedure; and
FIG. 13 is a flowchart showing a music search procedure.

### (1) Music Transfer/Storage System

### (1-1) Overall Configuration of Music Transfer/Storage System

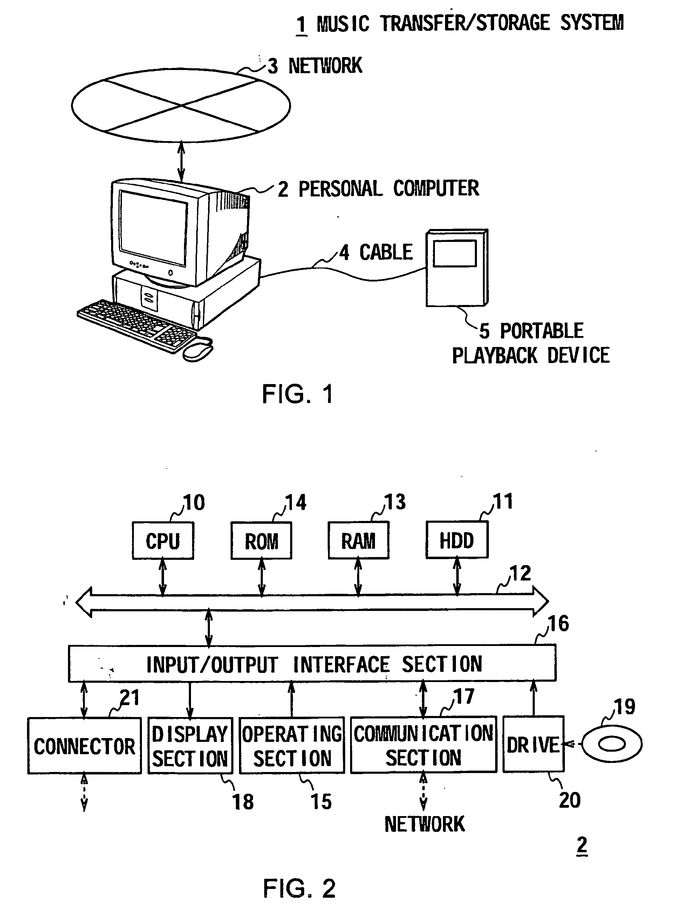

In FIG. 1, 1 indicates a music transfer/storage system, to which the present invention is applied, configured so that a personal computer 2 can acquire music data from a music data distribution server (not shown) on a network 3 such as the Internet, as well as read and acquire music data from recording media such as compact discs (CDs). The system is also configured so that the personal computer 2 can transfer music data acquired from the music data distribution server or the recording media to a portable playback device 5 via a prescribed cable 4 such as a universal serial bus (USB) cable, and store the music data in an internal hard disk of the portable playback device 5.

### (1-2) Configuration of Personal Computer 2

As shown in FIG. 2, in the personal computer 2, an internal central processing unit (CPU) 10 transfers Operating System (OS) and other basic programs pre-recorded on a hard disk of a hard disk drive 11 and various application programs such as a music transfer processing program etc. to a Random Access Memory (RAM) 13 via a bus 12, and by deploying such basic programs and various application programs at RAM 13 by arbitrarily using various parameters etc. for arithmetic operations etc. pre-recorded in a Read Only Memory (ROM) 14, thereby enabling overall control of the entire system and executing various processing according to the deployed basic programs and various application programs.

Thus, when an instruction to acquire music data is input sequentially via an input/output interface 16 and the bus 12 in response to a user's operation of an operating section 15 such as a keyboard or a mouse, the CPU 10 transmits a music display instruction signal instructing the display of music data that can be acquired to the music data distribution server on network 3 sequentially via the input/output interface 16 and communication section 17.

As a result, when the CPU 10 receives a music display signal transmitted by the music data distribution server sequentially via the communication section 17 and the input/output interface 16, the CPU 10 sends out the music display signal to a display section 18 via the input/output interface 16. Then, based on the music display signal, the CPU 10 displays on the display section 18 a music display screen which indicates music data that can be acquired from the music data distribution server by their music names etc.

In this state, when a user operates the operating section 15 and music data to be acquired is selected on the music display screen, the CPU 10 transmits a music acquisition instruction signal instructing the acquisition of the selected music data to the music data distribution server sequentially via the input/output interface 16 and communication section 17. Then, after the selected music data by the user is transmitted from the music data distribution server, the CPU 10 receives this sequentially via the communication section 17 and the input/output interface 16, and stores the received music data in a hard disk of the hard disk drive 11.

When an instruction to copy music data is input sequentially via the input/output interface 16 and the bus 12 in response to a user's operation of the operating section 15 while a recording medium 19 is loaded into the personal computer 2, the CPU 10 reads from a drive 20 music data recorded onto the recording medium 19, and stores the read music data in a hard disk of the hard disk device 11 sequentially via the input/output interface 16 and the bus 12.

Incidentally, music data distributed by a music data distribution server or recorded on a recording medium are attached with various information which indicates the attributes of a music (hereinafter referred to as "music attribute information"), such as music name or artist name based on the music data, the name of the genre to which the music belongs (i.e. genre name), the name of the album which contains the music (i.e. album name), and the sequence of the music within the album. Therefore, the CPU 10 stores music attribute information along with music data in the hard disk.

When a music display instruction is input sequentially via the input/output interface 16 and the bus 12 in response to a user's operation of the operating section 15 while a portable playback device 5 is connected to the personal computer 2 via connector 21, the CPU 10 reads from the hard disk music attribute information of a plurality of music data stored in the hard disk. The CPU 10 then generates music display screen data based on the music attribute information, and sends out the generated music display screen data to the display section 18 via the input/output interface 16. Then, the CPU 10 displays a music display screen on the display section 18 based on the music display screen data, displays for the user music names etc. of the music data that is transferable to the portable playback device 5.

In this state, when a user operates the operating section 15 and one or more music data to be transferred is selected on the music display screen, and a transfer instruction is input, the CPU 10 reads the music data selected by the user from a hard disk in the hard disk drive 11. The CPU 10 then transfers the music data read from the hard disk to the portable playback device 5 sequentially via the input/output interface 16 and connector 21, and stores the music data in an internal hard disk of the portable playback device 5.

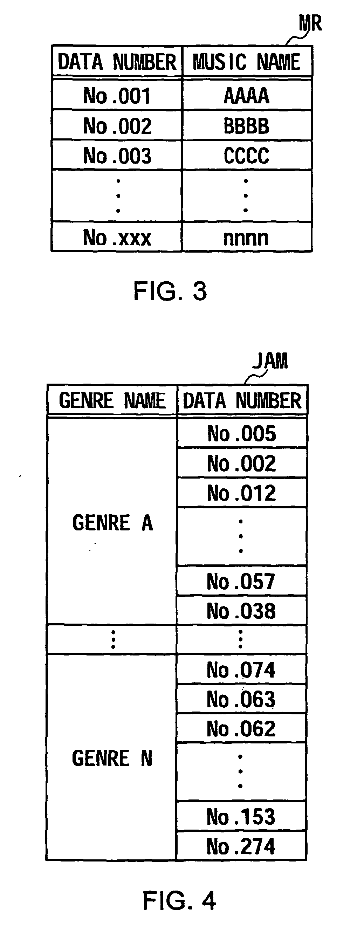

Additionally, as shown in FIG. 3, the CPU 10 issues data numbers which allow individual identification of the music data to be transferred. The CPU 10 then correlates the music names based on the music data to the data numbers unique to the music data to be transferred, and generates music management information MR to manage the music data. The CPU 10 then transfers the music management information MR to the portable playback device 5 sequentially via the input/output interface 16 and the connector 21, in addition to the music data to be transferred. Next, the CPU 10 registers the music management information MR to the music management database built in the internal hard disk of the portable playback device 5.

Thus, in addition to transferring music data arbitrarily selected to be transferred by the user to the portable playback device 5 to be stored, the CPU 10 is capable of managing all the music data transferred to and stored at the portable playback device 5 according to the music management information MR by additionally registering and updating the music management information MR to the portable playback device 5 whenever music data is transferred and stored.

Incidentally, when generating music management information MR, the CPU 10 confirms all the data numbers within the music management information MR that is registered in the music management database of the portable playback device 5, via the input/output interface 16 and connector 21. Then, based on the confirmation results of the data numbers, the CPU 10 detects data numbers which have not yet been issued for identification of the music data to be transferred, and issues the detected data numbers for identification of the music data to be newly transferred. Thus, the CPU 10 is capable of issuing without duplication data numbers corresponding to each music data to be stored in the portable playback device 5. Therefore, owing to the data numbers in the music management information MR, the CPU 10 is capable of accurately distinguishing each and every music data stored in the internal hard disk of the portable playback device 5.

Furthermore, when transferring music data to the portable playback device 5 and storing the music data, the CPU 10 generates attribute-based music information of, for instance, three types which categorizes and indicates the music data according to the music attribute information of the music data stored in the portable playback device 5.

In this case, the CPU 10 reads the music attribute information of all music data to be transferred to the portable playback device 5 from a hard disk of the hard disk drive 11. The CPU then generates the three types of attribute-based music information using, in addition to the music attribute information, the data numbers issued to the music data to be transferred to the portable playback device 5.

More specifically, according to the music attribute information and the data numbers, the CPU 10 categorizes all music data to be transferred to the portable playback device 5 into genres to which the music (hereinafter specifically referred to as "transfer/storage music") belong based on the music data, and arranges the music data in each genre into, for instance, alphabetical order of the music names of the transfer/storage music. Then, as shown in FIG. 4, the CPU 10 arranges the genre names (Genre A, ......, Genre N) of the genres in which the transfer/storage music belong into, for instance, alphabetical order, and correlates the data numbers of the music data which had been arranged so that the music names are in alphabetical order (while maintaining this order) to the arranged genre names. Thus, the CPU 10 generates attribute-based music information JAM which categorizes and indicates all music data to be transferred to the portable playback device 5 according to genres (hereinafter specifically referred to as "genre-based music information").

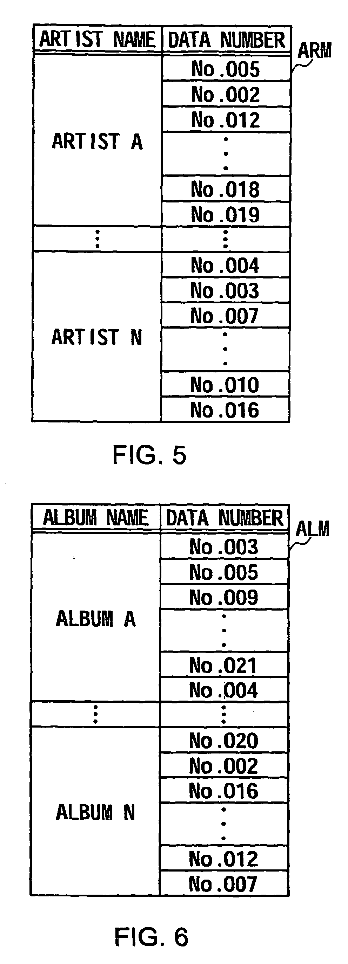

In addition, according to the music attribute information and the data numbers, the CPU 10 categorizes all music data to be transferred to the portable playback device 5 into artists performing the transfer/storage music based on the music data, and arranges the music data for each artist into, for instance, alphabetical order of the music names of the transfer/storage music. Then, as shown in FIG. 5, the CPU 10 arranges the artist names (Artist A, ....., Artist N) of the artists performing the transfer/storage music into, for instance, alphabetical order, and correlates the data numbers of the music data which had been arranged so that the music names are in alphabetical order (while maintaining this order) to the arranged artist names. Thus, the CPU 10 generates attribute-based music information ARM which categorizes and indicates all music data to be transferred to the portable playback device 5 according to artists (hereinafter specifically referred to as "artist-based music information").

Furthermore, according to the music attribute information and the data numbers, the CPU 10 categorizes all music data to be transferred to the portable playback device 5 into albums which contain the transfer/storage music based on the music data, and arranges the music data for each album into, for instance, the sequence of the transfer/storage music within that album. Then, as shown in FIG. 6, the CPU 10 arranges the album names (Album A, ......, Album N) of the albums containing the transfer/storage music into, for instance, alphabetical order, and correlates the data numbers of the music data which had been arranged so that the transfer/storage music are in the same order as the sequence of the album (while maintaining this order) to the arranged album names. Thus, the CPU 10 generates attribute-based music information ALM which categorizes and indicates all music data to be transferred to the portable playback device 5 according to albums (hereinafter specifically referred to as "album-based music information").

Thus, when transferring to the portable playback device 5 the music data and the music management information MR to be transferred, the CPU 10 additionally transfers sequentially via the input/output interface 16 and the connector 21 the three types of attribute-based music information (i.e. genre-based music information JAM, artist-based music information ARM, and album-based music information ALM) to the portable playback device 5. The CPU 10 then makes the portable playback device 5 generate, using the three types of attribute-based music information, music search information to be used for searching music data for the transfer/storage music.

Incidentally, in an initial transfer of a music data to the portable playback device 5, the CPU 10 generates the above-described three types of attribute-based music information.

In addition, when transferring music data for the second or subsequent time to the portable playback device 5, the CPU 10 reads all of the three types of attribute-based music information already transferred to the portable playback device 5 up to that point. The CPU 10 then updates the three types of attribute-based music information read from the portable playback device 5 based on the music attribute information of the music data to be newly transferred to the portable playback device 5, and transfers the updated three types of attribute-based music information together with the music data to the portable playback device 5. This enables the CPU 10 to easily generate the three types of attribute-based music information for all music data already transferred to the portable playback device 5 as well as all music data to be newly transferred.

Whenever music data is transferred to the portable playback device 5, if attribute-based music information is generated by reading from a hard disk of the personal computer 2 the music attribute information for all music already transferred, it will be difficult for the CPU 10 to sequentially generate attribute-based music information for all music already transferred to the portable playback device 5 after the music data transferred to the portable playback device 5 is erased from its hard disk together with the music attribute information of the music data. However, as described above, the CPU 10 pulls back attribute-based music information that has been transferred to the portable playback device 5 and updates it when transferring music data for the second or subsequent time. Therefore, the CPU 10 is capable of generating attribute-based music information in a consistent and accurate manner without having the hard disk of the personal computer 2 uneconomically store music data and their music attribute information transferred to the portable playback device 5 for an extend period of time.

### (1-3) Configuration of Portable Playback Device 5

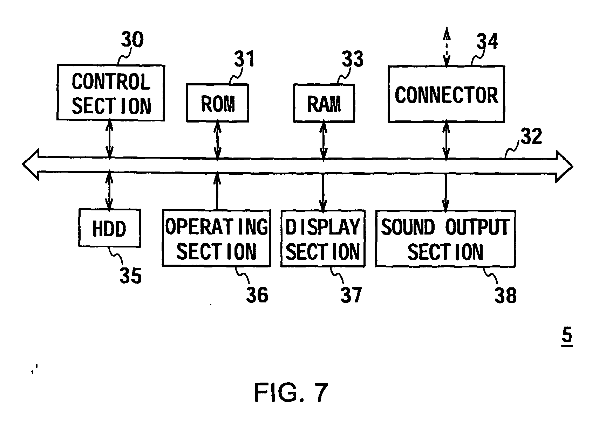

As shown in FIG. 7, in the portable playback device 5, a control section 30 including an internal CPU etc. transfers to a RAM 33 via a bus 32 basic programs or various application programs such as a music storage program or a music search program pre-recorded onto a ROM 31 and deploys such programs, thereby providing overall control for entire system and executing various processing according to the deployed basic programs and various application programs.

Thus, while the portable playback device 5 is connected to a personal computer 2 via a connector 34, the control section 30 functions dependently under the proactive control of a CPU 10 of the personal computer 2, and receives via the connector 34 music data transferred from the personal computer 2 and stores it in a hard disk of a hard disk drive 35.

A music management database has been built by the control section 30 in a hard disk of the hard disk drive 35. When music management information MR transferred together with the music data from the personal computer 2 is acquired via the connector 34, the control section 30 registers the music management information MR into the music management database in the hard disk, and accordingly updates the music management information MR.

When the three types of attribute-based music information (i.e. genre-based music information JAM, artist-based music information ARM, and album-based music information ALM), transferred together with the music data and the music management information MR from the personal computer 2, is acquired via the connector 34, the control section 30 temporarily stores such attribute-based music information on the RAM 33 or the hard disk.

After storing the music data, the music management information MR and the three types of attribute-based music information transferred from the personal computer 2 onto the hard disk, when the portable playback device 5 is disconnected from the personal computer 2, the control section 30 automatically generates music search information using the attribute-based music information.

Incidentally, the control section 30 is pre-set to generate music search information using at least one of the three types of attribute-based music information arbitrarily pre-selected by the user. Therefore, for the sake of explanation, a case where the control section 30 generates music search information using only artist-based music information ARM and album-based music information ALM among the three types of attribute-based music information will now be described.

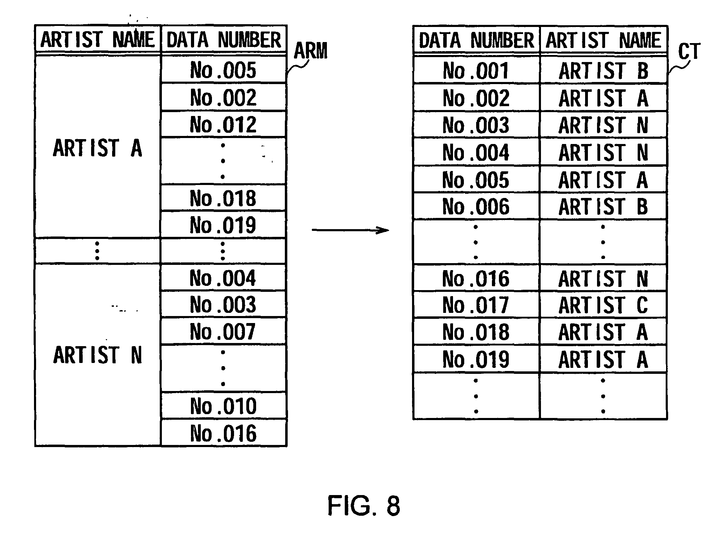

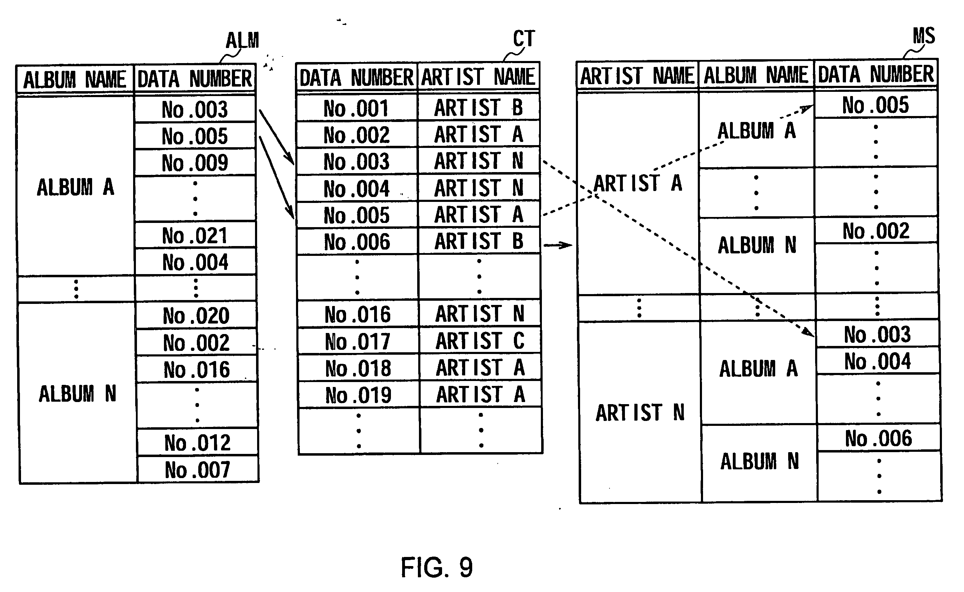

First, as shown in FIG. 8, the control section 30 generates a conversion table CT by rearranging all the data numbers included in the artist-based music information ARM in an ascending sequence while keeping their correlations with the artist names intact. Then, as shown in FIG. 9, using the conversion table CT, the control section 30 detects the artist names corresponding to the data numbers in each album included in the album-based music information ALM sequentially in the play order of the transfer/storage music within their respective albums, and sequentially correlates the data numbers as well as the album names categorizing the data numbers to the detected artist names. Thus, the control section 30, for instance, correlates the artists names arranged in alphabetical order to the album names, arranged, for instance, in alphabetical order, of the albums released by each artist, and generates music search information MS which arranges and correlates the data numbers according to the play order of the transfer/storage music within their respective album for each album.

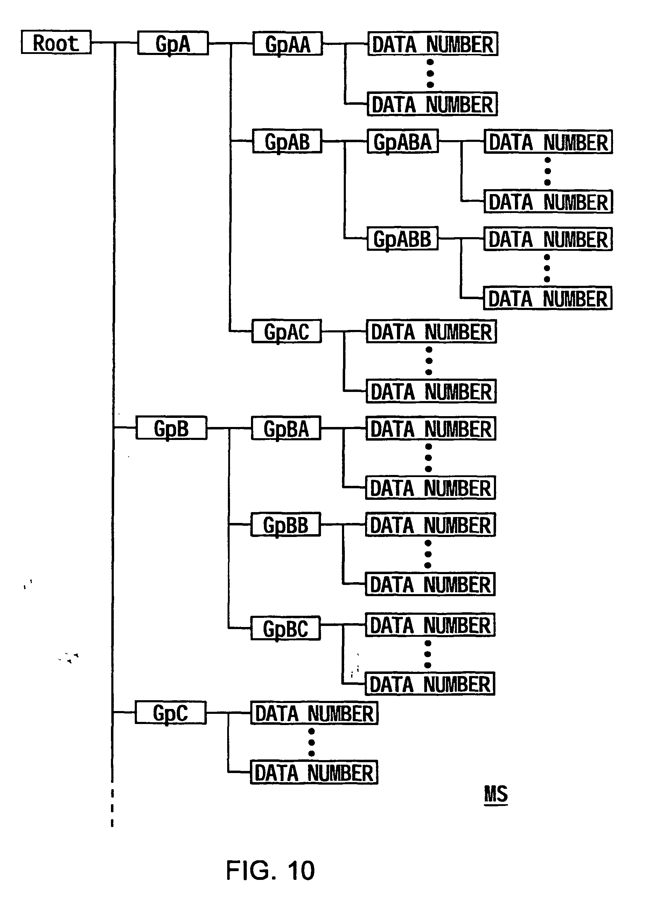

Incidentally, as is apparent from FIG. 9, music search information MS is sequentially segmentalized and hierarchically structured so that the number of music data during search can be incrementally narrowed down using groups (i.e. artist names or album names) to which the music data belongs. More specifically, as shown in FIG. 10, if the hierarchical structure of the various groups used for music search in music search information MS is to be expressed in a patternized tree structure, a root directory Root which organizes a plurality of music data will be the highest hierarchical level, and among the sequentially segmentalized groups GpA, ......, GpC used for music search which belong to a lower hierarchical level than the root directory Root, the groups GpAA, GpABA, GpABB, GpAC, GpBA, GpBB, GpBC and GpC from which music data (i.e. data numbers) can be directly selected will be the lowest hierarchical level. Incidentally, when applying the example shown in FIG. 9 to the music search information MS shown in FIG. 10, for instance the groups GpA and GpB will be the artist names, while the groups GpAA, GpAB, GpABA, GpABB, GpAC, GpBA, GpBB, GpBC and GpC will each be album names.

In this case, the control section 30 issues a unique group identification information for each of the groups GpA, ......, GpC of the hierarchical structure of the music search information MS. The control section 30 also generates for each of the groups GpA, ......, GpC of the hierarchical structure, as a part of the music search information MS, group information which correlates and stores their own group identification information, the group identification information for all of the groups GpA, ......, GpC that are one hierarchical level higher than the groups GpA, ......, GpC (if one hierarchical level higher is the root directory Root, then the identification information indicating root directory Root), and the group identification information for all of the groups GpA, ......, GpC that are one hierarchical level lower than the groups GpA, ......, GpC. This enables the control section 30 to accurately discriminate for each of the groups GpA, ......, GpC, based on each group information, the groups GpA, ......, GpC which are one hierarchical level higher and one hierarchical level lower than the groups GpA, ......, GpC.

However, for the group information related to the lowest hierarchical level groups GpAA, GpABA, GpABB, GpAC, GpBA, GpBB, GpBC and GpC, the control section 30 stores data numbers that can identify one or more music data which is selectable for each of the lowest hierarchical level groups GpAA, GpABA, GpABB, GpAC, GpBA, GpBB, GpBC and GpC, and discrimination information that can discriminate the play order within albums corresponding to the music data. Therefore, for the lowest hierarchical level groups GpAA, GpABA, GpABB, GpAC, GpBA, GpBB, GpBC and GpC, the control section 30 can accurately discriminate the groups GpA, GpAB and GpB which are one hierarchical level higher, and also discriminate selectable music data and their play order within their respective albums. Thus, the control section 30 is able to accurately recognize the entire hierarchical structure of each of the groups GpA, ......, GpC, based on each group information.

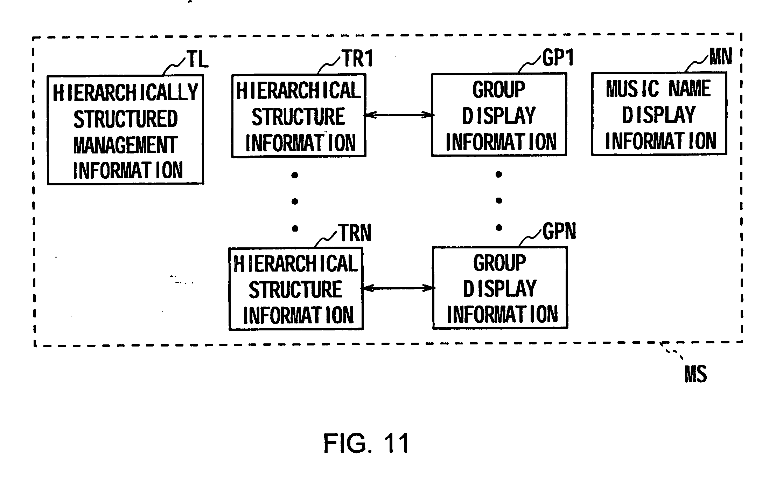

Then, as shown in FIG. 11, after generating music search information MS, the control section 30 divides the music search information MS into hierarchical structure management information TL, one or more hierarchical structure information TR1, ......, TRN, one or more group display information GP1, ......, GPN, and music name display information MN.

In this case, the hierarchical structure information TR1, ......, TRN is, for instance, composed of, among group information for all of the groups GpA, ......, GpC of the hierarchical structure, group information for the groups GpA, GpAA, GpAB, GpABA, GpABB and GpAC of a first branch portion which branches off from the root directory Root, group information for the groups GpB, GpBA, GpBB and GpBC of a second branch portion, and group information for the group GpC of a third branch portion. Thus, through the hierarchical structure information TR1, ......, TRN, the control section 30 is capable of recognizing the hierarchical structures of each branch portion group GpA, ......, GpAC, GpB, ......, GpBC and GpC, and each group GpA, ......, GpAC, GpB, ......, GpBC and GpC of each branch portion, among the overall hierarchical structure of each of the groups GpA, ......, GpC. Incidentally, if the number of the groups GpA, ......, GpC of the hierarchical structure are significantly small, or in response to certain factory settings etc. of the portable playback device 5, the control section 30 can express the entire hierarchical structure of each of the groups GpA, ....., GpC as one piece of hierarchical structure information.

Group display information GP1, ......, GPN is generated in an one-to-one correspondence with the hierarchical structure information TR1, ......, TRN, and have text information (i.e. character string information) indicating the group names such as the artist names or album names of each group GpA, ......, GpAC, GpB, ....., GpBC and GpC of the branch portion, and indicators which evoke the group names, such as artist names, album names etc. (hereinafter referred to as "group icons"). Furthermore, the music name display information MN have text information indicating the music names of transfer/storage music based on all music data stored in the hard disk, and the data numbers of the music data correlated to the text information, and indicators which evoke the transfer/storage music (hereinafter referred to as "music icons"). Additionally, hierarchical structure management information TL is provided in order to build and manage overall hierarchical structure of each of the groups GpA, ......, GpC through the hierarchical structure information TR1, ......, TRN, the group display information GP1, ......, GPN, and the music name display information MN.

The control section 30 then registers the hierarchical structure management information TL, one or more of hierarchical structure information TR1, ....., TRN, one or more of group display information GP1, , ....., GPN, and the music name display information MN, divided from the music search information MS to the music search database built in advance in a hard disk in the hard disk drive 35.

In this state, when the user operates an operating section 36 including control keys, the control section 30 reads the hierarchical structure management information TL from the music search database in the hard disk, and analyses the overall hierarchical structure of each of the groups GpA, ....., GpC. As a result, the control section 30 reads the hierarchical structure information TR1, ......, TRN, and the group display information GP1, ......, GPN from the music search database, and based on the read hierarchical structure information TR1, ...., TRN, and group display information GP1, ......, GPN, for instance selects the text information and the group icons which indicate all the groups GpA, GpB and GpC belonging to one hierarchical level lower than the root directory Root, and sends these out to a display section 37 including a liquid crystal display. Thus, the control section 30 displays via the display section 37 the group names (for instance artist names) and the group icons indicating all three groups GpA, GpB and GpC belonging to one hierarchical level lower than the root directory Root.

Then, when the user operates the operating section 36 and a group name or a groups icon corresponding to, for instance, a group GpA is selected on the display screen of the display section 37, based on the hierarchical structure information TR1 and the group display information GP1 of the branch portion to which the selected group GpA belongs, the control section 30 selects the text information and the group icons which indicate all the groups GpAA, GpAB and GpAC belonging to one hierarchical level lower than the selected group GpA, and sends these out to the display section 37. Thus, the control section 30 displays via the display section 37 the group names (for instance album names) and the group icons indicating the three groups GpAA, GpAB and GpAC belonging to one hierarchical level lower than the group GpA.

Next, when the user operates the operating section 36 and a group name or a groups icon corresponding to, for instance, a group GpAB is selected on the display screen of the display section 37, based on the hierarchical structure information TR1 and the group display information GP1 of the branch portion to which the selected group GpAB belongs, the control section 30 selects the text information and the group icons which indicate all the groups GpABA and GpABB belonging to one hierarchical level lower than the selected group GpAB, and sends these out to the display section 37. Thus, the control section 30 displays via the display section 37 the group names (for instance album names) and the group icons indicating the two groups GpABA and GpABB belonging to one hierarchical level lower than the group GpAB, which is the lowest hierarchical level.

Furthermore, when a user operates the operating section 36, and the group name and group icon corresponding to, for instance, group GpABA are selected on the display screen of the display section 37, the control section 30 in response transfers to the display section 37, in the sequence of their play order, text information and music icons which indicate the music names corresponding to the selectable music data of the group GpABA, based on the hierarchical structure information TR1 of the branch portion to which the selected lowest hierarchical level group GpABA belongs and music display information MN. The control section 30 also reads from the hard disk, in the play order within the album, selectable music data of the selected lowest hierarchical level group GpABA, and sends out to a sound output section 38 including a headphone etc. Thus, the control section 30 enables the user to listen to the transfer/storage music selected by the user by outputting the music via the sound output section 38, and is able to simultaneously notify the user of the music name and the music icon of the transfer/storage music currently being played by displaying them on the display section 37.

Incidentally, when the lowest hierarchical level groups GpAA, GpABA, GpABB, GpAC, GpBA, GpBB, GpBC and GpC are selected, while the control section 30 is capable of displaying the music names and the music icons while playing music data, the user can alter the settings so that only the music data is played, or only the music names and the music icons are displayed.

Furthermore, while the portable playback device 5 is running, the control section 30 keeps a history of the groups GpA, ......, GpC displayed for the user (hereinafter referred to as "group display history"). Upon start-up of the portable playback device 5, based on the group display history, when the control section 30 detects the existence of groups GpA, ......, GpC that were in the process of being displayed (i.e. group names and group icons that were in the process of being displayed) during the last stop, the control section 30 resumes displaying for the user from the groups GpA, ......, GpC that were in the process of being displayed (i.e. the group names and the group icons that were in the process of being displayed).

### (2) Music Transfer/Storage Process

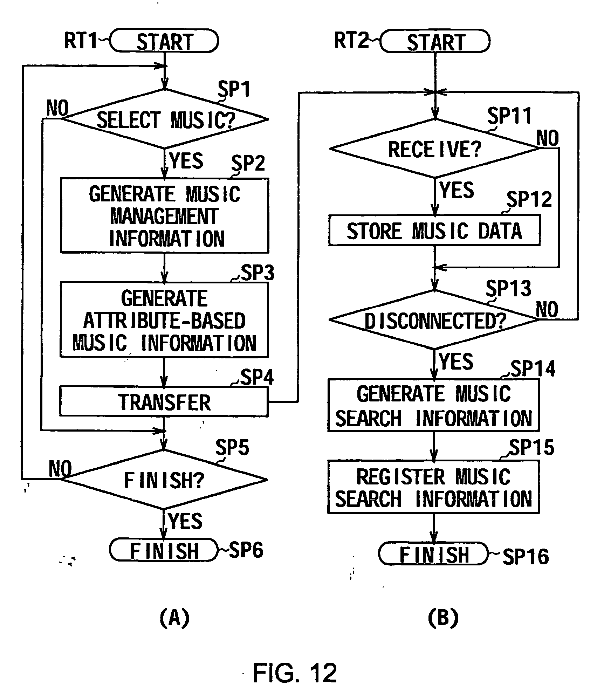

Next, a music transfer/storage process which is executed by a personal computer 2 and a portable playback device 5 will be described using the sequence chart shown in FIG. 12.

Firstly, when the portable playback device 5 is connected to the personal computer 2, a CPU 10 of the personal computer 2 commences a music transfer processing procedure RT1 according to a music transfer processing program. When commencing the music transfer processing procedure RT1, in step SP1, the CPU 10 determines whether or not the music data to be transferred has been selected by the user. As a result, for instance, if the user has selected the music data to be transferred and an affirmative result is obtained, the CPU 10 proceeds to the next step SP2.

In step SP2, the CPU 10 generates music management information MR in response to the music data to be transferred selected by the user, and proceeds to the next step SP3. In step SP3, based on music attribute information corresponding to the music data to be transferred, the CPU 10 generates the three types of attribute-based music information, namely genre-based music information JAM, artist-based music information ARM, and album-based music information ALM, and then proceeds to the next step SP4.

In step SP4, the CPU 10 reads the music data to be transferred from a hard disk of a hard disk drive 11, and transfers the read music data together with the music management information and the three types of attribute-based music information to the portable playback device 5, and then proceeds to the next step SP5.

In step SP5, the CPU 10 determines whether or not the music data to be transferred has been successfully concluded to the portable playback device 5. If the user has not yet input an instruction to conclude the transfer process of the music data and a negative result is obtained, the CPU 10 returns to step SP1. If new music data to be transferred is not selected by the user in step SP1, the CPU 10 proceeds to step SP5. Thus, until either new music data to be transferred is selected or an instruction to conclude the transfer process of the music data is input, the CPU 10 cyclically repeats the processes of steps SP1 through SP5, and awaits both the selection of new music data to be transferred and the input of the instruction to conclude the transfer process.

When new music data to be transferred is selected, the CPU 10 sequentially re-executes the processes of steps SP2, SP3 and SP4, and then proceeds to step SP5. Then, if an instruction to conclude the transfer process of the music data is input and an affirmative result is obtained in step SP5, the CPU 10 proceeds to the next step SP6, and concludes the music transfer processing procedure RT1.

Meanwhile, when the portable playback device 5 is connected to the personal computer 2 while activated, a control section 30 of the portable playback device 5 has commenced a music storage processing procedure RT2 according to the music storage program. When commencing the music storage processing procedure RT2, the control section 30, in step SP11, determines whether or not the music data, music management information MR and the attribute-based music information transferred from the personal computer 2 has been successfully received. As a result, if the music data, music management information MR and the attribute-based music information transferred from the personal computer 2 has been successfully received and an affirmative result is obtained, the control section 30 proceeds to the next step SP12.

In step SP12, the control section 30 stores the music data transferred from the personal computer 2 into a hard disk of a hard disk drive 35, and registers the music management information MR to a music management database inside the hard disk, and proceeds to the next step SP13. In SP13, the control section 30 determines whether or not the portable playback device 5 has been disconnected from the personal computer 2. As a result, if the portable playback device 5 has not been disconnected from the personal computer 2, the control section 30 returns to step SP11 in anticipation of the transfer of additional music data.

Next, when no music data, music management information MR or attribute-based music information transferred from the personal computer 2 has been received and therefore a negative result has been obtained in step SP11, the control section 30 proceeds to the next step SP13. Thus, until either the music data, music management information MR and attribute-based music information transferred from the personal computer 2 is received or the portable playback device 5 is disconnected from the personal computer 2, the control section 30 cyclically repeats the processes of steps SP11 through SP13, and awaits both the reception of music data, music management information MR and attribute-based music information and the disconnection of the portable playback device 5 from the personal computer 2.

As a result, when new music data is received together with music management information MR and attribute-based music information, the control section 30 re-executes the process of step SP12, and proceeds to step SP13. Then, when the portable playback device 5 is disconnected from the personal computer 2 and an affirmative result is obtained in step SP13, the control section 30 proceeds to the next step SP14.

In step SP14, as described above in reference to FIGS. 8 and 9, the control section 30 generates music search information MS using at least one of the three types of attribute-based music information transferred from the personal computer 2, and proceeds to the next step SP15. In step SP15, the control section 30 registers the music search information MS to a music search database in the hard disk, and proceeds to the next step SP16, thereby concluding the music storage processing procedure RT2. In this manner, the personal computer 2 and the portable playback device 5 concludes all music transfer/storage processes.

### (3) Music Search Processing Procedure

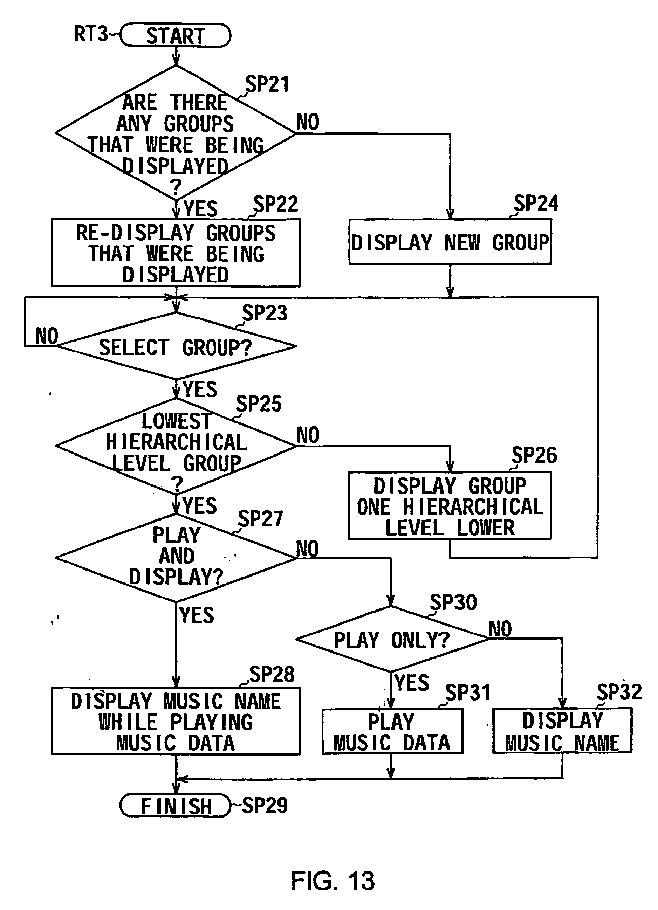

Next, a music search processing procedure RT3 executed by a portable playback device 5 will be described using the flowchart shown in FIG. 13.

When, for instance, the portable playback device 5 is activated by an external input of start-up instructions, a control section 30 of the portable playback device 5 commences a music search processing procedure RT3 according to a music search processing program. Upon commencement of the music search processing procedure RT3, the control section 30 determines in step SP21, based on the group display history, whether or not the last activation of the portable playback device 5 was stopped while the groups GpA, ......, GpC to be used for music search were in the process of being displayed (i.e. group names and group icons were in the process of being displayed) to the user via a display section 37.

An affirmative result obtained in step SP21 means that during the last activation of the portable playback device 5, the activation of the portable playback device 5 was stopped while search for transfer/storage music was being executed by displaying the groups GpA, ....., GpC to be used for music search in response to the user's operations for the purpose of playing music data or confirming stored music data etc. More specifically, an affirmative result signifies that it is highly possible that a new activation of the portable playback device 5 will re-commence a search for transfer/storage music using as a starting point groups GpA, ......, GpC, which were in the process of being displayed in the last activation. The control section 30 then proceeds to the next step SP22.

In step SP22, the control section 30 discriminates text information and group icons corresponding to the groups GpA, ....., GpC to be used for music search which were in the process of being displayed in the last activation, based on a group display history and a music search information MS. Then, by sending out the text information and the group icons to the display section 37, the control section 30 displays through the display section 37 the group names and the group icons indicating the groups GpA, ......, GpC to be used for music search which were in the process of being displayed in the last activation. Thus, by re-displaying to the user the groups GpA, ......, GpC to be used for music search which were in the process of being displayed in the last activation, the control section 30 proceeds to the next step SP23.

On the other hand, a negative result obtained in step SP21 above means that during the last activation of the portable playback device 5, the activation of the portable playback device 5 was stopped after search for transfer/storage music in order to play music data or confirm stored music data etc. had been signified. More specifically, a negative result signifies that it is highly possible that a new activation of the portable playback device 5 will commence a new search for transfer/storage music by newly displaying groups GpA, ......, GpC to be used for music search. Thus, the control section 30 proceeds to step SP24.

In step SP24, based on the music search information MS, the control section 30 selects, for instance, the text information and the group icons indicating all of the groups GpA, GpB and GpC which belong to one hierarchical level lower than the root directory Root, and sends these out to the display section 37 and the display section 37 displays the group names and the group icons indicating the three groups GpA, GpB and GpC which belong to one hierarchical level lower than the root directory Root. Thus, by displaying to the user new groups GpA, GpB and GpC to be used for music search, the control section 30 proceeds to step SP23.

In step SP23, the control section 30 awaits the selection, in proceeding with the search for transfer/storage music, of one or more of the groups GpA, ......, GpC either re-displayed or newly displayed to the user (i.e. the selection of any group name or group icon on the display screen). When one of the groups GpA, ......, GpC to be used for music search displayed to the user is selected, the control section 30 proceeds to the next step SP25.

In step SP25, the control section 30 determines whether or not the groups GpA, ......, GpC selected by the user are the lowest hierarchical level groups GpAA, GpABA, GpABB, GpAC, GpBA, GpBB, GpBC and GpC. A negative result obtained in step SP25 means that the selected groups GpA, GpAB, GpB are at least one hierarchical level higher than the lowest hierarchical level groups GpAA, GpABA, GpABB, GpAC, GpBA, GpBB, GpBC and GpC, and the user is currently narrowing down transfer/storage music for search. The control section 30 then proceeds to step SP26.

In step SP26, based on the music search information MS, the control section 30 selects the text information and the group icons indicating all of the groups GpAA, GpAB, GpABA, GpABB, GpAC, GpBA, GpBB, GpBC and GpC, which are one hierarchical level lower than the groups GpA, GpAB and GpB selected by the user, and sends out the text information and the group icons to the display section 37. The display section 37 displays the group names and the group icons. Then, after displaying to the user the groups GpAA, GpAB, GpABA, GpABB, GpAC, GpBA, GpBB, GpBC and GpC which are one hierarchical level lower than the selected groups GpA, GpAB and GpB, the control section 30 returns to step SP23.

Thus, until the lowest hierarchical level groups GpAA, GpABA, GpABB, GpAC, GpBA, GpBB, GpBC and GpC are selected by the user, the control section 30 cyclically repeats the processes of steps SP23, SP25 and SP26. The control section 30 awaits the selection of the lowest hierarchical level groups GpAA, GpABA, GpABB, GpAC, GpBA, GpBB, GpBC and GpC.

An affirmative result obtained in step SP25 means that, along with the lowest hierarchical level groups GpAA, GpABA, GpABB, GpAC, GpBA, GpBB, GpBC and GpC, one or more music data selectable from the lowest hierarchical level groups GpAA, GpABA, GpABB, GpAC, GpBA, GpBB, GpBC and GpC has been selected, and the control section 30 then proceeds to the next step SP27.

In step SP27, the control section 30 determines whether the music name corresponding to the music data selected by the user will be displayed while the music data is being played. An affirmative result in step SP27 means that the user's pre-set call for the music names corresponding to the selected music data to be displayed while the music data is being played during the search for transfer/storage music. The control section 30 then proceeds to the next step SP28.

In step SP28, based on the music search information MS, the control section 30 discriminates the data numbers and the play order in the albums corresponding to all music data selected by the user via the lowest hierarchical level groups GpAA, GpABA, GpABB, GpAC, GpBA, GpBB, GpBC and GpC. Then, according to the discrimination results, the control section 30 reads from a hard disk of the hard disk drive 35 music data corresponding to the discriminated data numbers in a sequence matching that of the similarly discriminated play order, and outputs as transfer/storage music via the sound output section 38.

In addition, based on the music search information MS, the control section 30 identifies the text information (i.e. music name) and the music icons corresponding to all music data selected by the user via the lowest hierarchical level groups GpAA, GpABA, GpABB, GpAC, GpBA, GpBB, GpBC and GpC. The control section 30 then sends out the identified text information and the music icons to display section 37 to display the music names and the music icons. Thus, the control section 30 enables the user to listen to and see the selected music data as transfer/storage music and music names, thereby enabling search of music data for the purpose of playing the music or confirming the music names. Then, when all music data selected by the user has been played, the control section 30 proceeds to the next step SP29 to conclude the music search processing procedure RT3.

Incidentally, a negative result obtained in step SP27 means that the user's pre-set calls for either only the playing of the selected music data or only the displaying of the music names corresponding to the selected music data to be executed during the search for transfer/storage music. In this case, the control section 30 then proceeds to step SP30.

In step SP30, the control section 30 determines whether only the music data selected by the user is only to be played. An affirmative result obtained in step SP30 means that the user desires to only listen to the transfer/storage music based on the selected music data. In this case, the control section 30 then proceeds to the next step SP31.

In step SP31, based on the music search information MS, the control section 30 discriminates the data numbers and the play order in the albums corresponding to all music data selected by the user via the lowest hierarchical level groups GpAA, GpABA, GpABB, GpAC, GpBA, GpBB, GpBC and GpC. Then, according to the discrimination results, the control section 30 reads from a hard disk of the hard disk drive 35 music data corresponding to the discriminated data numbers in a sequence matching that of the similarly discriminated play order, and outputs as transfer/storage music via the sound output section 38. Thus, the control section 30 enables the user to listen to the selected music data as transfer/storage music, thereby enabling search of music data to be played. Then, when all music data selected by the user has been played, the control section 30 proceeds to step SP29.

Meanwhile, a negative result obtained in step SP30 means that the user desires only the displaying of the music names of the transfer/storage music based on the selected music data. In this case, the control section 30 then proceeds to step SP32. Then, in step SP32, based on the music search information MS, the control section 30 discriminates the text information (i.e. music name) and the music icons corresponding to all music data selected by the user via the lowest hierarchical level groups GpAA, GpABA, GpABB, GpAC, GpBA, GpBB, GpBC and GpC. The control section 30 then sends out the discriminated text information and the music icons to display section 37 to display the music names and the music icons. Thus, the control section 30 enables the user to visually confirm the selected music data as music names, thereby enabling search of music data for confirming the music names. Then, when the music names corresponding to all music data selected by the user has been displayed, the control section 30 proceeds to step SP29.

Incidentally, when displaying the music names of the selected one or more music data to the user, one or more music names can be either displayed all at once, or displayed one at a time in response to the user's operations by the control section 30. The displaying of the music names is concluded by an instruction from the user to stop displaying.

### (4) Operation and Advantages

In the above configuration, when a personal computer 2 transfers music data to a portable playback device 5 to be stored, a music transfer/storage system 1 generates, based on music attribute information of the music data to be transferred, three types of attribute-based music information which categorizes and indicates the music data according to each attribute of the transfer/storage music, and transfers the generated attribute-based music information to the portable playback device 5 along with the music data. When the portable playback device 5 is provided with attribute-based music information along with the music data from the personal computer 2, the portable playback device 5 generates music search information MS using at least one of the three types of attribute-based music information.

Thus, by generating music search information MS using the attribute-based music information generated by the personal computer 2, the portable playback device 5 is able to significantly reduce the processing when generating music search information, as compared to generating music search information MS from scratch based on the music attribute information of the music data.

According to the above configuration, by making the portable playback device 5 generate music search information MS, to be used in searching music data stored in a hard disk of the portable playback device 5, based on attribute-based music information transferred along with the music data from the personal computer 2, the processing for generating music search information MS can be greatly reduced, thereby allowing the generation of music search information MS while minimizing processing load.

In addition, when music data is transferred from the personal computer 2 and the portable playback device 5 generates music search information MS based on attribute-based music information transferred along with the music data, since the processing of the music search information MS is significantly reduced, the portable playback device 5 can generate the music search information MS in a short period of time. Therefore, when storing music data transferred from the personal computer 2, the portable playback device 5 is able to commence and execute music search processing in an expeditious manner with hardly keeping the user waiting.

Furthermore, by receiving from the personal computer 2 three types of attribute-based music information which categorizes and indicates the music data according to each attribute of the transfer/storage music, the portable playback device 5 can use one of the three types of attribute-based music information without modification as the music search information MS, or partially modify the attribute-based music information to generate music search information MS, or combine two or more types of the attribute-based music information to generate music search information MS. Thus, unlike other portable playback devices, the portable playback device 5 enables the user to create music search information MS having an original configuration that enables the user to easily search music data to suit his or her own preferences, or otherwise enables the user to create music search information MS with a configuration set according to its own processing capabilities, and thereby dramatically enhancing the freedom in regards of generating music search information MS.

Moreover, by allowing pre-sets which arbitrarily combine whether or not the music names will be displayed and whether or not the music data will be played during the search for transfer/storage music, the portable playback device 5 is able to avoid needlessly displaying the music names when the user wishes only to listen to the transfer/storage music or needlessly playing music data when the user merely wishes to confirm music names, thereby accurately responding to the specific usage of the user.

### (5) Other Embodiments

While the case of generating music search information MS using the three types of attribute-based music information, namely genre-based music information JAM, artist-based music information ARM, and album-based music information ALM, generated based on music attribute information, has been described in relation to the above-mentioned embodiment, the present invention is by no means limited to the above-described case, and music search information can be generated using year-of-release-based music information generated based on such music attribute information as the year of the release of the music data, the company which released the album containing the music data, or the country of origin of the album, or by using record company-based music information or country-based music information.

In the above-described music transfer/storage system 1, by transferring from a personal computer 2 at least two types of attribute-based music information to a portable playback device 5, the portable playback device 5 can generate, using at least two or more types of attribute-based music information, music search information MS which hierarchically structures groups, and enables search in an easy and accurate manner using the music search information MS to sequentially narrow down the number of music data.

Furthermore, in the above-described embodiment, while the case of applying a content storage device according to one embodiment of the present invention to a portable playback device 5 is described above in reference to FIGS. 1 to 13, the present invention is by no means limited to the above application, and can be universally applied to a wide variety of content storage devices such as a personal computer, a mobile phone, a PDA (personal digital assistance), information processing equipment such as gaming machines, a hard disk recorder or a DVD (digital versatile disc) recorder.

Furthermore, in the above-described embodiment, while the case of applying a content transfer device according to one embodiment of the present invention to a personal computer 2 is described above in reference to FIGS. 1 to 13, the present invention is by no means limited to the above application, and can be universally applied to a wide variety of content transfer devices such as a KIOSK terminal installed at small retail stores (so-called KIOSKs), a mobile phone, a PDA, information processing equipment such as gaming machines, or in playback devices such as a DVD player or a CD player.

Furthermore, in the above-described embodiment, while the case of applying a content transfer/storage system according to one embodiment of the present invention to a music transfer/storage system 1 is described above in reference to FIGS. 1 to 13, the present invention is by no means limited to the above application, and can be universally applied to a wide variety of content transfer/storage systems including diversely configured content transfer devices and content storage devices, and transfer and store visual data, text data, game programs etc. as content data.

Furthermore, in the above-described embodiment, while the case of applying a control section 30 and a connector 34 of the portable playback device 5, above-described in reference to FIGS. 1 to 13, as a content acquisition section to acquire external content data has been described, the present invention is by no means limited to the above application, and a wide variety of content acquisition sections such as a content acquisition circuit etc. with a hardware circuitry which externally acquires content data can be universally applied.

Furthermore, in the above-described embodiment, while the case of applying a control section 30 and a hard disk drive 35 of the portable playback device 5, above-described in reference to FIGS. 1 to 13, as a storage section to store content data acquired by the content acquisition section has been described, the present invention is by no means limited to the above application, and a wide variety of storage units such as a memory circuit etc. with a hardware circuitry which stores content data to recording media detachably mounted on the portable playback device 5 can be universally applied.

Furthermore, in the above-described embodiment, while the case of applying a control section 30 and a connector 34 of the portable playback device 5, above-described in reference to FIGS. 1 to 13, as an information acquisition section to externally acquire attribute-based content information which categorizes and indicates content data according to each attribute of the content data stored in the storage unit has been described, the present invention is by no means limited to the above application, and a wide variety of information acquisition sections such as an information acquisition circuit etc. with a hardware circuitry which acquires attribute-based content information can be universally applied.

Furthermore, in the above-described embodiment, while the case of applying a control section 30 of the portable playback device 5, above-described in reference to FIGS. 1 to 13, as a search information generating section to generate, using attribute-based content information acquired by the information acquisition section, content search information to be used in searching content data stored in the storage unit has been described, the present invention is by no means limited to the above application, and a wide variety of search information generating sections such as an search information generating circuit etc. with a hardware circuitry which generates content search information using attribute-based content information can be universally applied.

Furthermore, in the above-described embodiment, while the case of applying a display section 37 including a liquid crystal display of the portable playback device 5, above-described in reference to FIGS. 1 to 13, as a group name displaying section to display the group names of one or more groups of the same hierarchical level among the hierarchically structured groups indicated by the content search information has been described, the present invention is by no means limited to the above application, and a wide variety of group name displaying sections such as a cathode ray tube etc. provided externally to the portable playback device 5 can be universally applied.

Furthermore, in the above-described embodiment, while the case of applying an operating section 36 of the portable playback device 5, above-described in reference to FIGS. 1 to 13, as a selection section to enable the user to select group names displayed by the display section has been described, the present invention is by no means limited to the above application, and a wide variety of selection sections such as a touch panel or a remote controller etc. can be universally applied.

Furthermore, in the above-described embodiment, while the case of applying a control section 30 of the portable playback device 5, above-described in reference to FIGS. 1 to 13, as a display controlling section to control the display section so as to display, when a group name displayed by the display section is selected via the selection section, the group names of one or more of the groups that are one hierarchical level lower than the group corresponding to the selected group name, has been described, the present invention is by no means limited to the above application, and a wide variety of display controlling sections such as a display controlling circuit etc. with a hardware circuitry which controls the display section can be universally applied.

Furthermore, in the above-described embodiment, while the case of applying a control section 30 and a hard disk drive 35 of the portable playback device 5, above-described in reference to FIGS. 1 to 13, as a data playback section to play, when a group name of a group of the lowest hierarchical level displayed by the display section is selected via the selection section, content data belonging to the group corresponding to the selected group name has been described, the present invention is by no means limited to the above application, and a wide variety of data playback sections such as a data playback circuit etc. with a hardware circuitry which plays content data stored on recording media detachably mounted on the portable playback device 5 can be universally applied.

Furthermore, in the above-described embodiment, while the case of applying a control section 30 of the portable playback device 5, above-described in reference to FIGS. 1 to 13, as a display controlling section to control the display section so as to display, when a group name of a group of a higher hierarchical level than the lowest hierarchical level displayed by the display section is selected via the selection section, the group names of one or more of the groups that are one hierarchical level lower than the group corresponding to the selected group name, and further, when a group name of a group of the lowest hierarchical level displayed by the display section is selected via the selection section, the names of the content data belonging to the group corresponding to the selected group name, has been described, the present invention is by no means limited to the above application, and a wide variety of display controlling sections such as a display controlling circuit etc. with a hardware circuitry which controls the display section can be universally applied.

Furthermore, in the above-described embodiment, while the case of applying a CPU 10, an input/output interface section 16 and a connector 21 of the personal computer 2, above-described in reference to FIGS. 1 to 13, as a content transfer section to transfer content data to the content storage device has been described, the present invention is by no means limited to the above application, and a wide variety of content transfer sections such as a content transfer circuit etc. with a hardware circuitry which transfers content data to content storage unit can be universally applied.

Furthermore, in the above-described embodiment, while the case of applying a CPU 10 of the personal computer 2, above-described in reference to FIGS. 1 to 13, as a content information generating section to generate attribute-based content information which categorizes and indicates content data transferred by the content transfer section to the content storage device according to each attribute of the content data has been described, the present invention is by no means limited to the above application, and a wide variety of content information generating sections such as a content information generating circuit etc. with a hardware circuitry which generates attribute-based content information can be universally applied.

Furthermore, in the above-described embodiment, while the case of applying a CPU 10, an input/output interface section 16 and a connector 21 of the personal computer 2, above-described in reference to FIGS. 1 to 13, as an information transfer section to transfer attribute-based content information generated by the content information generating section to the content storage device has been described, the present invention is by no means limited to the above application, and a wide variety of information transfer sections such as an information transfer circuit etc. with a hardware circuitry which transfers attribute-based content information to a content storage device can be universally applied.

The present invention can be used in a personal computer, a mobile phone, a PDA, a gaming machine, as well as data storage devices such as a hard disk recorder.

In should be understood by those skilled in the art that various modifications, combinations, sub-combinations and alterations may occur depending on design requirements and other factors insofar as they are within the scope of the appended claims or the equivalents thereof.

## Claims

1. A content storage device (5) comprising:
data acquisition means (34) for externally acquiring content data and attribute-based content information (JAM, ARM, ALM) which categorizes and indicates the content data according to each attribute of the content data, wherein the data acquisition means is constructed and arranged to acquire the attribute-based content information (JAM, ARM, ALM) separately to the content data, and said attribute-based content information (JAM, ARM, ALM) comprises attribute-based content information (JAM, ARM, ALM) for at least first and second attributes;
storage means (35) for storing said content data acquired by said data acquisition means (34); and
search information generating means (30) for generating, with said attribute-based content information (JAM, ARM, ALM) acquired by said information acquisition means (34), content search information (MS) to be used for searching said content data stored in said storage means (35),
wherein the search information generating means (30) is constructed and arranged to generate the content search information (MS) by generating a conversion table (CT) from attribute-based content information (JAM, ARM, ALM) for said first attribute and then using the conversion table (CT) to create the content search information (MS) from attribute-based content information (JAM, ARM, ALM) for said second attribute.

2. The content storage device (5) according to claim 1, wherein said search information generating means generates said content search information which sequentially segmentalizes, hierarchically structuralizes and indicates groups to which said content data stored in said storage means belongs.

3. The content storage device (5) according to claim 1 or 2, comprising:
group name displaying means (37) for displaying the group names of one or more groups of the same hierarchical level among said hierarchically structuralized groups indicated by said content search information (MS);
selection means (36) for selecting said group names indicated by said displaying means (37);
display controlling means (30) for controlling said displaying means (37) so as to display, when said group name displayed by said displaying means (37) is selected via said selection means (36), said group names of one or more said groups belonging to one hierarchical level lower than said groups of the said selected group name; and
data playback means (38) for playing, when said group name of said group in the lowest hierarchical level displayed by said displaying means (37) is selected via said selection means (36), said content data belonging to said group of said selected group name.

4. The content storage device (5) according to claim 1 or 2, comprising:
group name displaying means (37) for displaying the group names of one or more groups of the same hierarchical level among said hierarchically structuralized groups indicated by said content search information (MS);
selection means (36) for selecting said group names indicated by said displaying means (37); and
display controlling means (30) for controlling said displaying means (37) so as to display, when said group name of said group that is of a higher hierarchical level than the lowest hierarchical level displayed by said display means (37) is selected via said selection means (36), said group names of one or more said groups that are one hierarchical level lower than the said group corresponding to the selected group name, and further displaying, when said group name of said group of said lowest hierarchical level displayed by said display means (37) is selected via said selection means (36), the names of said content data belonging to said group corresponding to the selected group name.

5. The content storage device (5) according to claim 1 or 2, comprising:
group name displaying means (37) for displaying the group names of one or more relevant groups of same hierarchical level among said hierarchically structuralized groups indicated by said content search information (MS);
selection means (36) for selecting said group names indicated by said displaying means (37);
display controlling means (30) for controlling said displaying means (37) so as to display, when said group name of said group that is of a higher hierarchical level than the lowest hierarchical level displayed by said display means is selected via said selection means (36), said group names of one or more said groups that are one hierarchical level lower than the said group corresponding to the selected group name, and further displaying, when said group name of said group of said lowest hierarchical level displayed by said display means is selected via said selection means (36), the name of said content data belonging to said group corresponding to the selected group name; and
data playback means (38) for playing, when said group name of said group of said lowest hierarchical level displayed by said display means (37) is selected via said selection means (36), said content data belonging to said group corresponding to the selected group name.

6. A content storage method comprising:
a storage step of externally acquiring and storing content data;
an information acquisition step of externally acquiring attribute-based content information (JAM, ARM, ALM) which categorizes and indicates said stored content data according to attributes of said content data, wherein the storage step is separate to the information acquisition step and said attribute-based content information (JAM, ARM, ALM) comprises attribute-based content information (JAM, ARM, ALM) for at least first and second attribute;
a search information (MS) generating step (SP14) which generates, with said attribute-based content information (JAM, ARM, ALM) acquired in said information acquisition step, content search information (MS) to be used to search said stored content data;
wherein the search information (MS) generating step further comprises generating the content search information (MS) by generating a conversion table (CT) from attribute-based content information (JAM, ARM, ALM) for said first attribute and then using the conversion table (CT) to create the content search information (MS) from attribute-based content information (JAM, ARM, ALM) for said second attribute.

7. A content storage program causing an information-processing device to execute:
a storage step of externally acquiring and storing content data;
an information acquisition step of externally acquiring attribute-based content information (JAM, ARM, ALM) which categorizes and indicates said stored content data according to attributes of said content data, wherein the storage step is separate to the information acquisition step, and said attribute-based content information (JAM, ARM, ALM) comprises attribute-based content information (JAM, ARM, ALM) for at least first and second attribute; and
a search information (MS) generating step (SP14) of generating, with said attribute-based content information (JAM, ARM, ALM) acquired in said information acquisition step, content search information (MS) to be used to search said stored content data;
wherein the search information (MS) generating step further comprises generating the content search information (MS) by generating a conversion table (CT) from attribute-based content information (JAM, ARM, ALM) for said first attribute and then using the conversion table (CT) to create the content search information (MS) from attribute-based content information (JAM, ARM, ALM) for said second attribute.

8. A content transfer/storage system including a content transfer device (2) for transferring content data and a content storage device (5) for storing said content data transferred from said content transfer device (2), wherein:
said content transfer device (2) further comprises:
content transfer means (21) for transferring said content data to said content storage device (5);
content information generating means (10) for generating attribute-based content information (JAM, ARM, ALM) for categorizing and indicating said content data, transferred to said content storage device (5) by said content transfer means (21), according to attributes of said content data; and
information transfer means (21) for transferring said attribute-based content information (JAM, ARM, ALM) generated by said content information generating means (10) to said content storage device (5), wherein said content transfer means (21) and said information transfer means are constructed and arranged such that the attribute-based content information (JAM, ARM, ALM) and the content data are transferred separately, and said attribute-based content information (JAM, ARM, ALM) comprises attribute-based content information (JAM, ARM, ALM) for at least first and second attributes; and
said content storage device (5) further comprises:
content acquisition means (34) for acquiring said content data and said attribute-based content information (JAM, ARM, ALM) transferred from said content transfer device (2);
storage means (35) for storing said content data acquired by said content acquisition means (34); and
search information generating means (30) for generating, using said attribute-based content information (JAM, ARM, ALM) acquired by said content acquisition means (34), content search
information (MS) to be used for searching said content data stored in said storage means (35),
wherein the search information generating means (30) generates the content search information (MS) by generating a conversion table (CT) from attribute-based content information (JAM, ARM, ALM) for said first attribute and then using the conversion table (CT) to create the content search information.

## Patentansprüche

1. Inhaltsspeichereinrichtung (5), welche aufweist:
eine Datenerwerbseinrichtung (34) zum externen Erwerben von Inhaltsdaten und attribut-basierender Inhaltsinformation (JAM, ARM, ALM), welche die Inhaltsdaten gemäß jedem Attribut der Inhaltsdaten kategorisiert und anzeigt, wobei die Datenerwerbseinrichtung aufgebaut und eingerichtet ist, die attribut-basierende Inhaltsinformation (JAM, ARM, ALM) separat zu den Inhaltsdaten zu erwerben, und die attribut-basierende Inhaltsinformation (JAM, ARM, ALM) attribut-basierende Inhaltsinformation (JAM, ARM, ALM) für zumindest erste und zweite Attribute umfasst;
eine Speichereinrichtung (35) zum Speichern der Inhaltsdaten, welche durch die Datenerwerbseinrichtung (34) erworben wurden; und
eine Suchinformations-Erzeugungseinrichtung (30) zum Erzeugen - mit der attribut-basierenden Inhaltsinformation (JAM, ARM, ALM), welche durch die Inhaltserwerbseinrichtung (34) erworben wurde - von Inhaltssuchinformation (MS), welche zum Suchen der Inhaltsdaten zu verwenden ist, welche in der Speichereinrichtung (35) gespeichert sind,
wobei die Suchinformations-Erzeugungseinrichtung (30) aufgebaut und eingerichtet ist, die Inhaltssuchinformation (MS) zu erzeugen, wobei eine Umsetzungstabelle (CT) von der attribut-basierenden Inhaltsinformation (JAM, ARM, ALM) für das erste Attribut erzeugt wird, und dann die Umsetzungstabelle (CT) verwendet wird, um die Inhaltssuchinformation (MS) für die attribut-basierende Inhaltsinformation (JAM, ARM, ALM) für das zweite Attribut zu bilden.

2. Inhaltsspeichereinrichtung (5) nach Anspruch 1, wobei die Suchinformations-Erzeugungseinrichtung die Inhaltssuchinformation erzeugt, welche Gruppen sequentiell segmentiert, hierarchisch strukturiert und anzeigt, zu denen die Inhaltsdaten, welche in der Inhaltseinrichtung gespeichert sind, gehören.

3. Inhaltsspeichereinrichtung (5) nach Anspruch 1 oder 2, welche aufweist:
eine Gruppennamen-Anzeigeeinrichtung (37) zum Anzeigen der Gruppennamen von einer oder mehreren Gruppen der gleichen hierarchischen Ebene unter den hierarchisch strukturierten Gruppen, welche durch die Inhaltssuchinformation (MS) angezeigt werden;
eine Auswahleinrichtung (36) zum Auswählen der Gruppennamen, welche durch die Anzeigeeinrichtung (37) angezeigt werden;
eine Anzeigesteuereinrichtung (30) zum Steuern der Anzeigeeinrichtung (37), um, wenn der Gruppenname, der durch die Anzeigeeinrichtung (37) angezeigt wird, über die Auswahleinrichtung (36) ausgewählt wird, angezeigt wird, die Gruppennamen von einer oder mehreren Gruppen, welche zu einer hierarchischen Ebene gehören, die niedriger ist als die Gruppen des ausgewählten Gruppennamens, anzuzeigen; und
eine Datenwiedergabeeinrichtung (38) zum Wiedergeben, wenn der Gruppenname der Gruppe in der untersten hierarchischen Ebene, welche durch die Anzeigeeinrichtung (37) angezeigt wird, über die Auswahleinrichtung (36) ausgewählt wird, der Inhaltsdaten, welche zu der Gruppe des ausgewählten Gruppennamens gehören.

4. Inhaltsspeichereinrichtung (5) nach Anspruch 1 oder 2, welche aufweist:
eine Gruppennamen-Anzeigeeinrichtung (37) zum Anzeigen der Gruppennamen von einer oder mehreren Gruppen der gleichen hierarchischen Ebene unter den hierarchisch strukturierten Gruppen, welche durch die Inhaltssuchinformation (MS) angezeigt werden;
eine Auswahleinrichtung (36) zum Auswählen der Gruppennamen, welche durch die Anzeigeeinrichtung (37) angezeigt werden; und
eine Anzeigesteuereinrichtung (30) zum Steuern der Anzeigeeinrichtung (37), um, wenn der Gruppenname der Gruppe, welcher aus einem höheren hierarchischen Ebene als die unterste hierarchische Ebene besteht, welche durch die Anzeigeeinrichtung (37) angezeigt wird, über die Auswahleinrichtung (36) ausgewählt wird, die Gruppennamen von einer oder mehreren Gruppen anzuzeigen, welche eine hierarchische Ebene niedriger sind als die Gruppe entsprechend des ausgewählten Gruppennamens, und um weiter, wenn der Gruppenname dieser Gruppe der untersten hierarchischen Ebene, welche durch die Anzeigeeinrichtung angezeigt wird, über die Auswahleinrichtung (36) ausgewählt wird, die Namen der Inhaltsdaten, welche zu der Gruppe gehören, entsprechend des ausgewählten Gruppennamens anzuzeigen.

5. Inhaltsspeichereinrichtung (5) nach Anspruch 1 oder 2, welche aufweist:
eine Gruppennamen-Anzeigeeinrichtung (37) zum Anzeigen der Gruppennamen von einer oder mehreren relevanten Gruppen der gleichen hierarchischen Ebene unter den hierarchisch strukturierten Gruppen, welche durch die Inhaltssuchinformation (MS) angezeigt werden;
eine Auswahleinrichtung (36) zum Auswählen der Gruppennamen, welche durch die Anzeigeeinrichtung (37) angezeigt werden;
eine Anzeigesteuereinrichtung (30) zum Steuern der Anzeigeeinrichtung (37), um, wenn der Gruppenname der Gruppe, welche von einem höheren hierarchischen Ebene ist als die unterste hierarchische Ebene, welche durch die Anzeigeeinrichtung angezeigt wird, über die Auswahleinrichtung (36) ausgewählt wird, die Gruppennamen von einer oder mehreren der Gruppen anzuzeigen, welche eine hierarchische Ebene niedriger sind als die Gruppe entsprechend des ausgewählten Gruppennamens, und um weiter, wenn der Gruppenname der Gruppe der untersten hierarchischen Ebene, der durch die Anzeigeeinrichtung angezeigt wird, über die Auswahleinrichtung (36) ausgewählt wird, den Namen der Inhaltsdaten, welche zu der Gruppe gehören, welche des ausgewählten Gruppennamens entspricht, anzuzeigen; und
eine Datenwiedergabeeinrichtung (38) zum Wiedergeben, wenn der Gruppenname der Gruppe der untersten hierarchischen Ebene, welche durch die Anzeigeeinrichtung (37) angezeigt wird, über die Auswahleinrichtung (36) ausgewählt wird, der Inhaltsdaten, welche zu der Gruppe gehören, welche dem ausgewählten Gruppennamen entspricht.

6. Inhaltsspeicherverfahren, welches aufweist:
einen Speicherschritt zu externen Erwerben und Speichern von Inhaltsdaten;
einen Informationserwerbsschritt zum externen Erwerben attribut-basierender Inhaltsdaten (JAM, ARM, ALM), welcher die gespeicherten Inhaltsdaten kategorisiert und anzeigt, gemäß den Attributen der Inhaltsdaten, wobei der Speicherschritt separat zum Informationserwerbsschritt ist und die attribut-basierende Inhaltsinformation (JAM, ARM, ALM) attribut-basierende Inhaltsinformation (JAM, ARM, ALM) für zumindest das erste und zweite Attribut umfasst;
einen Suchinformations-(MS)-Erzeugungsschritt (SP14), der mit der attribut-basierenden Inhaltsinformation (JAM, ARM, ALM), welche im Informationserwerbsschritt erworben wird, Inhaltssuchinformation (MS) erzeugt, die zu verwenden ist, die gespeicherten Inhaltsdaten zu suchen;
wobei der Suchinformations-(MS)-Erzeugungsschritt außerdem das Erzeugen der Inhaltssuchinformation (MS) umfasst, wobei eine Umsetzungstabelle (CT) von der attribut-basierenden Inhaltsinformation (JAM, ARM, ALM) für das erste Attribut erzeugt wird und dann die Umsetzungstabelle (CT) verwendet wird, um die Inhaltssuchinformation (MS) für die attribut-bezogene Inhaltsinformation (JAM, ARM, ALM) für das zweite Attribut zu bilden.

7. Inhaltsspeicherprogramm, welches bewirkt, dass eine Informationsverarbeitungseinrichtung ausführt:
einen Speicherschritt zum externen Erwerben und Speichern von Inhaltsdaten;
einen Inhaltserwerbsschritt zum externen Erwerben attribut-basierender Inhaltsinformation (JAM, ARM, ALM), welche die gespeicherten Inhaltsdaten kategorisiert und anzeigt, gemäß Attributen der Inhaltsdaten, wobei der Speicherschritt separat zum Inhaltserwerbsschritt ist, und die attribut-basierende Inhaltsinformation (JAM, ARM, ALM) attribut-basierende Inhaltsinformation (JAM, ARM, ALM) für zumindest das erste und zweite Attribut umfasst; und
einen Suchinformations-(MS)-Erzeugungsschritt (SP14) zum Erzeugen - mit der attribut-bezogenen Inhaltsinformation (JAM, ARM, ALM), welche im Informationserwerbsschritt erworben wurde - von Inhaltssuchinformation (MS), welche zu verwenden ist, die gespeicherten Inhaltsdaten zu suchen;
wobei der Suchinformations-(MS)-Erzeugungsschritt außerdem das Erzeugen der Inhaltssuchinformation (MS) durch Erzeugen einer Umsetzungstabelle (CT) von der attribut-basierenden Inhaltsinformation (JAM, ARM, ALM) für das erste Attribut umfasst und dann das Verwenden der Umsetzungstabelle (CT), um die Inhaltssuchinformation (MS) für die attribut-basierende Inhaltsinformation (JAM, ARM, ALM) für das zweite Attribut zu bilden.

8. Inhaltsübertragungs-/Speichersystem, welches eine Inhaltsübertragungseinrichtung (2) aufweist, um Inhaltsdaten zu übertragen, und eine Inhaltsspeichereinrichtung (5), um die Inhaltsdaten, welche von der Inhaltsübertragungseinrichtung (2) übertragen wurden, zu speichern, wobei:
die Inhaltsübertragungseinrichtung (2) außerdem aufweist:
eine Inhaltsübertragungseinrichtung (21) zum Übertragen der Inhaltsdaten zur Inhaltsspeichereinrichtung (5);
eine Inhaltsinformations-Erzeugungseinrichtung (10) zum Erzeugen von attribut-basierender Inhaltsinformation (JAM, ARM, ALM) zum Kategorisieren und Anzeigen der Inhaltsdaten, welche zur Inhaltsspeichereinrichtung (5) über die Inhaltsübertragungseinrichtung (21) übertragen wurden, gemäß Attributen der Inhaltsdaten; und
eine Informationsübertragungseinrichtung (21) zum Übertragen der attribut-basierenden Inhaltsinformation (JAM, ARM, ALM), welche durch die Inhaltsinformations-Erzeugungseinrichtung (10) erzeugt wurde, zur Inhaltsspeichereinrichtung (5), wobei die Inhaltsübertragungseinrichtung (21) und die Informationsübertragungseinrichtung aufgebaut und eingerichtet sind, dass die attribut-basierende Inhaltsinformation (JAM, ARM, ALM) und die Inhaltsdaten separat übertragen werden, und die attribut-basierende Inhaltsinformation (JAM, ARM, ALM) attribut-basierende Inhaltsinformation (JAM, ARM, ALM) für zumindest erste und zweite Attribute umfasst; und
die Inhaltsspeichereinrichtung (5) außerdem aufweist:
eine Inhaltserwerbseinrichtung (34) zum Erwerben der Inhaltsdaten und der attribut-basierenden Inhaltsinformation (JAM, ARM, ALM), welche von der Inhaltsübertragungseinrichtung (2) übertragen wurde;
eine Speichereinrichtung (35) zum Speichern der Inhaltsdaten, welche durch die Inhaltserwerbseinrichtung (34) erworben wurden; und
eine Suchinformations-Erzeugungseinrichtung (30) zum Erzeugen unter Verwendung der attribut-basierenden Inhaltsinformation (JAM, ARM, ALM), welche durch die Inhaltserwerbseinrichtung (34) erworben wurde, von Inhaltssuchinformation, welche zu verwenden ist, um die Inhaltsdaten, welche in der Speichereinrichtung (35) gespeichert sind, zu suchen,
wobei die Suchinformations-Erzeugungseinrichtung (30) die Inhaltsuchinformation (MS) erzeugt, wobei eine Umsetzungstabelle (CT) von der attribut-basierenden Inhaltsinformation (JAM, ARM, ALM) für das erste Attribut erzeugt wird und dann die Umsetzungstabelle (CT) verwendet wird, um die Inhaltssuchinformation zu bilden.

## Revendications

1. Dispositif de stockage de contenu (5) comprenant :
un moyen d'acquisition de données (34) pour acquérir de façon externe des données de contenu et une information de contenu basée sur attribut (JAM, ARM, ALM) qui catégorise et indique les données de contenu conformément à chaque attribut des données de contenu, dans lequel le moyen d'acquisition de données est construit et agencé de manière à acquérir l'information de contenu basée sur attribut (JAM, ARM, ALM) séparément des données de contenu, et ladite information de contenu basée sur attribut (JAM, ARM, ALM) comprend une information de contenu basée sur attribut (JAM, ARM, ALM) pour au moins des premier et second attributs) ;
un moyen de stockage (35) pour stocker lesdites données de contenu acquises par ledit moyen d'acquisition de données (34) ; et
un moyen de génération d'information de recherche (30) pour générer, à l'aide de ladite information de contenu basée sur attribut (JAM, ARM, ALM) qui est acquise par ledit moyen d'acquisition d'information (34) une information de recherche de contenu (MS) destinée à être utilisée pour rechercher lesdites données de contenu stockées dans ledit moyen de stockage (35),
dans lequel le moyen de génération d'information de recherche (30) est construit et agencé de manière à générer l'information de recherche de contenu (MS) en générant une table de conversion (CT) à partir d'une information de contenu basée sur attribut (JAM, ARM, ALM) pour ledit premier attribut puis en utilisant la table de conversion (CT) afin de créer l'information de recherche de contenu (MS) à partir de l'information de contenu basée sur attribut (JAM, ARM, ALM) pour ledit second attribut.

2. Dispositif de stockage de contenu (5) selon la revendication 1, dans lequel ledit moyen de génération d'information de recherche génère ladite information de recherche de contenu qui segmente séquentiellement, structure hiérarchiquement et indique des groupes auxquels lesdites données de contenu qui sont stockées dans ledit moyen de stockage appartiennent.

3. Dispositif de stockage de contenu (5) selon la revendication 1 ou 2, comprenant :
un moyen d'affichage de nom de groupe (37) pour afficher les noms de groupe d'un ou de plusieurs groupes du même niveau hiérarchique parmi lesdits groupes structurés hiérarchiquement qui sont indiqués par ladite information de recherche de contenu (MS) ;
un moyen de sélection (36) pour sélectionner lesdits noms de groupe indiqués par ledit moyen d'affichage (37) ;
un moyen de commande d'affichage (30) pour commander ledit moyen d'affichage (37) de manière à afficher, lorsque ledit nom de groupe affiché par ledit moyen d'affichage (37) est sélectionné via ledit moyen de sélection (36), lesdits noms de groupe d'un ou de plusieurs desdits groupes appartenant à un niveau hiérarchique plus bas que ceux desdits groupes dudit nom de groupe sélectionné ; et
un moyen de lecture de données (38) pour lire, lorsque ledit nom de groupe dudit groupe dans le niveau hiérarchique le plus bas comme affiché par ledit moyen d'affichage (37) est sélectionné via ledit moyen de sélection (36), lesdites données de contenu appartenant audit groupe dudit nom de groupe sélectionné.

4. Dispositif de stockage de contenu (5) selon la revendication 1 ou 2, comprenant :
un moyen d'affichage de nom de groupe (37) pour afficher les noms de groupe d'un ou de plusieurs groupes du même niveau hiérarchique parmi lesdits groupes structurés hiérarchiquement indiqués par ladite information de recherche de contenu (MS) ;
un moyen de sélection (36) pour sélectionner lesdits noms de groupe indiqués par ledit moyen d'affichage (37) ; et
un moyen de commande d'affichage (30) pour commander ledit moyen d'affichage (37) de manière à afficher, lorsque ledit nom de groupe dudit groupe qui est d'un niveau hiérarchique plus élevé que le niveau hiérarchique plus bas comme affiché par ledit moyen d'affichage (37) est sélectionné via ledit moyen de sélection (36), lesdits noms de groupe d'un ou de plusieurs desdits groupes qui sont à un niveau hiérarchique plus bas que celui dudit groupe correspondant au nom de groupe sélectionné, et pour afficher en outre, lorsque ledit nom de groupe dudit groupe dudit niveau hiérarchique plus bas affiché par ledit moyen d'affichage (37) est sélectionné via ledit moyen de sélection (36), les noms desdites données de contenu appartenant audit groupe correspondant au nom de groupe sélectionné.

5. Dispositif de stockage de contenu (5) selon la revendication 1 ou 2, comprenant :
un moyen d'affichage de nom de groupe (37) pour afficher les noms de groupe d'un ou de plusieurs groupes pertinents du même niveau hiérarchique parmi lesdits groupes structurés hiérarchiquement indiqués par ladite information de recherche de contenu (MS) ;
un moyen de sélection (36) pour sélectionner lesdits noms de groupe indiqués par ledit moyen d'affichage (37) ;
un moyen de commande d'affichage (30) pour commander ledit moyen d'affichage (37) de manière à afficher, lorsque ledit nom de groupe dudit groupe qui est d'un niveau hiérarchique plus élevé que le niveau hiérarchique le plus bas comme affiché par ledit moyen d'affichage (37) est sélectionné via ledit moyen de sélection (36), lesdits noms de groupe d'un ou de plusieurs desdits groupes qui sont à un niveau hiérarchique plus bas que celui dudit groupe correspondant au nom de groupe sélectionné, et pour en outre afficher, lorsque ledit nom de groupe dudit groupe dudit niveau hiérarchique le plus bas affiché par ledit moyen d'affichage est sélectionné via ledit moyen de sélection (36), le nom desdites données de contenu appartenant audit groupe correspondant au nom de groupe sélectionné ; et
un moyen de lecture de données (38) pour lire, lorsque ledit nom de groupe dudit groupe dudit niveau hiérarchique le plus bas affiché par ledit moyen d'affichage (37) est sélectionné via ledit moyen de sélection (36), lesdites données de contenu appartenant audit groupe correspondant au nom de groupe sélectionné.

6. Procédé de stockage de contenu comprenant :
une étape de stockage consistant à acquérir de façon externe et à stocker des données de contenu ;
une étape d'acquisition d'information consistant à acquérir de façon externe une information de contenu basée sur attribut (JAM, ARM, ALM) qui catégorise et indique lesdites données de contenu stockées conformément à des attributs desdites données de contenu, où l'étape de stockage est séparée de l'étape d'acquisition d'information et ladite information de contenu basée sur attribut (JAM, ARM, ALM) comprend une information de contenu basée sur attribut (JAM, ARM, ALM) pour au moins des premier et second attributs) ;
une étape de génération d'information de recherche (MS) (SP14) qui génère, à l'aide de ladite information de contenu basée sur attribut (JAM, ARM, ALM) acquise au niveau de ladite étape d'acquisition d'information, une information de recherche de contenu (MS) destinée à être utilisée pour rechercher lesdites données de contenu stockées,
dans lequel l'étape de génération d'information de recherche (MS) comprend en outre la génération de l'information de recherche de contenu (MS) en générant une table de conversion (CT) à partir d'une information de contenu basée sur attribut (JAM, ARM, ALM) pour ledit premier attribut puis en utilisant la table de conversion (CT) afin de créer l'information de recherche de contenu (MS) à partir d'une information de contenu basée sur attribut (JAM, ARM, ALM) pour ledit second attribut.

7. Programme de stockage de contenu qui a pour effet qu'un dispositif de traitement d'information exécute :
une étape de stockage consistant à acquérir de façon externe et à stocker des données de contenu ;
une étape d'acquisition d'information consistant à acquérir de façon externe une information de contenu basée sur attribut (JAM, ARM, ALM) qui catégorise et indique lesdites données de contenu stockées conformément à des attributs desdites données de contenu, où l'étape de stockage est séparée de l'étape d'acquisition d'information et ladite information de contenu basée sur attribut (JAM, ARM, ALM) comprend une information de contenu basée sur attribut (JAM, ARM, ALM) pour au moins des premier et second attributs) ;
une étape de génération d'information de recherche (MS) (SP14) qui génère, à l'aide de ladite information de contenu basée sur attribut (JAM, ARM, ALM) acquise au niveau de ladite étape d'acquisition d'information, une information de recherche de contenu (MS) destinée à être utilisée pour rechercher lesdites données de contenu stockées,
dans lequel l'étape de génération d'information de recherche (MS) comprend en outre la génération de l'information de recherche de contenu (MS) en générant une table de conversion (CT) à partir d'une information de contenu basée sur attribut (JAM, ARM, ALM) pour ledit premier attribut puis en utilisant la table de conversion (CT) afin de créer l'information de recherche de contenu (MS) à partir d'une information de contenu basée sur attribut (JAM, ARM, ALM) pour ledit second attribut.

8. Système de transfert/stockage de contenu incluant un dispositif de transfert de contenu (2) pour transférer des données de contenu et un dispositif de stockage de contenu (5) pour stocker lesdites données de contenu transférées depuis ledit dispositif de transfert de contenu (2), dans lequel :
ledit dispositif de transfert de contenu (2) comprend en outre :
un moyen de transfert de contenu (21) pour transférer lesdites données de contenu jusqu'audit dispositif de stockage de contenu (5) ;
un moyen de génération d'information de contenu (10) pour générer une information de contenu basée sur attribut (JAM, ARM, ALM) pour catégoriser et indiquer lesdites données de contenu, transférées jusqu'audit dispositif de stockage de contenu (5) par ledit moyen de transfert de contenu (21), conformément à des attributs desdites données de contenu ; et
un moyen de transfert d'information (21) pour transférer ladite information de contenu basée sur attribut (JAM, ARM, ALM) générée par ledit moyen de génération d'information de contenu (10) jusqu'audit dispositif de stockage de contenu (5), dans lequel ledit moyen de transfert de contenu (21) et ledit moyen de transfert d'information sont construits et agencés de telle sorte que l'information de contenu basée sur attribut (JAM, ARM, ALM) et les données de contenu soient transférées séparément, et ladite information de contenu basée sur attribut (JAM, ARM, ALM) comprend une information de contenu basée sur attribut (JAM, ARM, ALM) pour au moins des premier et second attributs ; et
ledit dispositif de stockage de contenu (5) comprend en outre :
un moyen d'acquisition de contenu (34) pour acquérir lesdites données de contenu et ladite information de contenu basée sur attribut (JAM, ARM, ALM) comme transféré depuis ledit dispositif de transfert de contenu (2) ;
un moyen de stockage (35) pour stocker lesdites données de contenu acquises par ledit moyen d'acquisition de données de contenu (34) ; et
un moyen de génération d'information de recherche (30) pour générer, à l'aide de ladite information de contenu basée sur attribut (JAM, ARM, ALM) acquise par ledit moyen d'acquisition d'information (34), une information de recherche de contenu (MS) destinée à être utilisée pour rechercher lesdites données de contenu stockées dans ledit moyen de stockage (35),
dans lequel le moyen de génération d'information de recherche (30) génère l'information de recherche de contenu (MS) en générant une table de conversion (CT) à partir d'une information de contenu basée sur attribut (JAM, ARM, ALM) pour ledit premier attribut puis en utilisant la table de conversion (CT) afin de créer l'information de recherche de contenu.
